# EUROPEAN PATENT SPECIFICATION

(11) **EP 0 495 337 B1**
(45) Date of publication and mention of the grant of the patent: **12.04.1995**
(21) Application number: 91810950.5
(22) Date of filing: 06.12.1991
(51) Int. Cl.: E04C 1/40, E02B 3/14

(54) **Structural element a part of whose volume is occupied by a compressed elastomer material and process for achieving it**
Bauelement, dessen Volumen teilweise von einem komprimierten, elastomeren Material besetzt ist und Vorrichtung zu seiner Herstellung
Elément de construction avec une partie de son volume occupée par un matériel elastomer compressé et procédé pour sa réalisation

(30) Priority: 16.01.1991 CH 105/91
(43) Date of publication of application: 22.07.1992
(73) Proprietor: GRIMSDYKE TRADING LIMITED, London NW1 8EH (GB)
(72) Inventor: Camani, Alfredo, CH-6517 Arbedo (CH)
(74) Representative: Baggiolini, Raimondo

(56) References cited:
- AT-B- 333 006
- AU-A- 67 958
- DE-A- 2 946 539
- DE-A- 3 342 043
- DE-A- 3 732 987
- DERWENT JAPANESE PATENTS REPORT volume 76, no 29, Derwent Publications Ltd., London, GB; AN 76-55401X

## Description

Some structural elements, usually in one piece, used particularly for constructions such as wharves, protective walls, barrier or retaining works in port facilities or the like, are "lightened" by the use of shaped forms, or by replacement of a part of the material of which they are made (for example, concrete) with a material of another type having less specific weight.

The applicant has found that such filling material, for example polyurethane of polystyrene, besides having its own not insignificant inherent cost, has practically negligible characteristics of mechanical restance, and has no other function than that of simply occupying a part of the volume of the element in which it is inserted, not offering resistance to any type of stresses. In other cases, such as the example described by document JP-B-51 020 076 (See Derwent Japanese Patent Report, vol 76, no 29), which represents the closest state of the art and discloses a process for the production of structural elements which correspond to the preamble of claim 1, rubber tyres are used, but mixed together with cement material which, after having dried up and hardened, does not allow to properly exploit the elasticity of the rubber, and involves economical and environmental problems.

A better functioning would be obtained if the materials used for filling were replaced with materials of a different type, provided with good mechanical resistance to compression, combined with a notable elasticity, which can guarantee an elastic return of the structure of the element able to restore, by stresses due, for example, to blows of a given amount, the original shape of the element itself, at the same time reducing the effect of the blows themselves on its outside surface.

The applicant, inventor of the process which is the object of this application and of the structural elements with which it is embodied, has seen the appropriateness of the use, for the above described purpose, of rubber or other elastomer, precompressed to a given extent before being inserted in the element itself.

Considering how difficult and ecologically harmful today is the elimination of the enormous amount of tires no longer reusable, he further thought of obtaining precisely from such tires the material to be used as filler in structural elements, after having subjecting it to the process that is the object of the invention.

Conceiving such a process, he solved the three following problems at the same time: elimination of unreusable tires, the construction of lightened elements resistant to blows or to crushing and provided with a certain structural elasticity, and finally the discovery of a material of zero cost to make said filling. The invention is a process for the production of structural elements able to be used for the construction of wall works, wharves, guardrails, port works and the like, wherein a part of the inside volume of the element is occupied with the rubber of casings of tires which are no longer reusable whose volume has been reduced to a given extent by compression, the process being characterized by the following phases:
a) fragmentation of casings performed by a device suitable for cutting casings themselves;
b) conveying pieces thus obtained into work area of a press;
c) pressing of said pieces at a pressure sufficient to obtain a desired percentage reduction of the volume occupied by them, and obtaining "packages" having substantially a parallelepiped shape;
d) blocking of said packages which is only obtained by ties made with several wires having a resistance to traction sufficient to contain the thrust generated by the elastic flowback of said pressed pieces;
e) insertion and anchoring of one or more packages inside a structural element of the wished shape and made with the wished material.

A preferred embodiment of the process is realized for building structural elements of reinforced concrete: in this case, the aforementioned phase e) consists in:
- insertion and anchoring of one or more packages in a form by concrete in the desired position, with laying of reinforcement rods;
- filling of form by pouring concrete.

A description of said preferred embodiment of the process of the invention is given below with reference to the accompanying drawings. There are represented in:
figure 1, the various phases of the process and the type of equipment used;
figure 2, the longitudinal section of a preferred embodiment of a structural element made with the process, object of the invention.

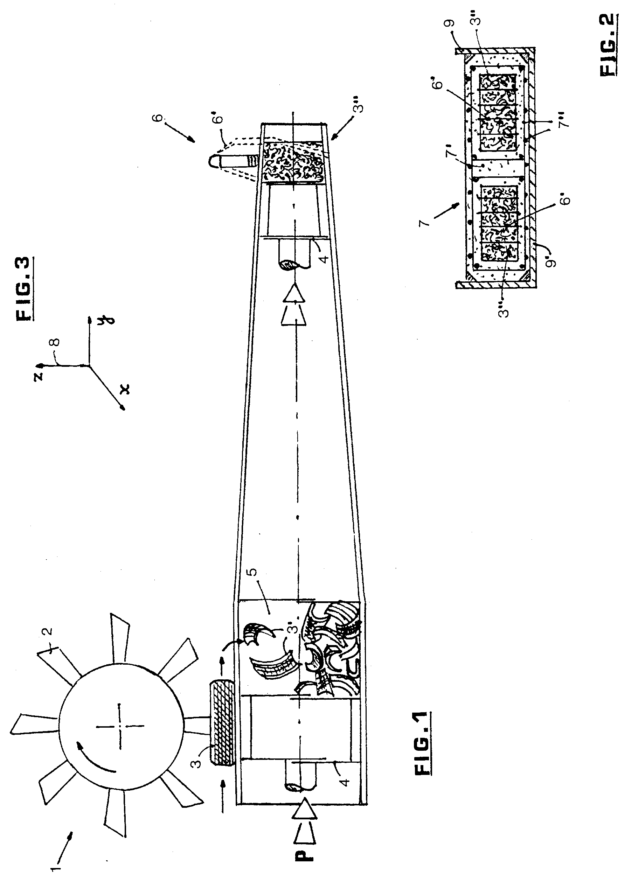

According to a preferred embodiment of the process (see fig. 1), casings 3 are sent into a device able to cut casings 3 by reducing them to pieces 3' of limited dimensions. In the figure, this device is a rotating unit 1 carrying blades 2' but can also be a shearing machine or cutter of known type.

The reinforcement wires, even if made of steel, of the casing and of their beads are also cut and do not in any way affect the results of the process, since their volume and their weight are negligible with respect to the volume and total weight of pieces 3'.

Pieces 3' thus obtained are pushed or in any case conveyed with known systems into work area 5 of a press 4, also of known type, able to reduce the dimension of the pressed material at the same time in all three directions, perpendicular to one another, of a trio 8 of orthogonal axes (figure 3).

In a practical embodiment, the percentage reduction of the volume is pushed to 87%, but this value can be amply exceeded by using equipment of suitable type.

The piece 3', pressed to form a package 3'' having substantially the shape of a parallelepiped, are then blocked or, so to speak, "frozen," in this situation, for example, by means of equipment 6 of known type able to make a suitable number of ties per unit of length, depending on the final dimensions of said pieces, the ties being made with wires or bands 6' having a resistance to traction sufficient to prevent the elastic flowback of the pressed pieces. Another possible blocking method consists in vulcanizing package 3'' in its condition of maximum compression, causing pieces 3' to form a single whole.

Package 3'', once blocked as said, it is ready to be used.

It can be used as filler of structures of the most varied shapes, and made with different materials, such as metal, synthetic materials, or concrete, whether reinforced or not.

The preferred embodiment of structural element 7 considered in the drawings (fig. 2) refers to the last case cited, in which structural element 7 is made of reinforced concrete.

With a form 9 having the desired shape prepared, and with a part of reinforcement 7'' already put in place on bottom 9', there are inserted in form 9, and anchored there, one or more packages 3'' of pressed pieces, then, when the laying of the reinforcement is finished, concrete 7' is poured with well-known systems about which it would be superfluous to give further details; when setting has occurred, lightened structural element 7 is ready for use.

By reducing the volume of pieces 3' to a preset extent, it is possible to obtain the desired increase of the coefficient of rigidity to compression of packages 3'', able to make packages 3'' work with the structure of element 7 in resisting the stresses to which it is subjected, especially those of compression caused by blows or crushing. Therefore element 7, as a whole, also exhibits a certain elasticity, which limits the effects of stresses, especially on its most external surface, and absorbs, by damping it, also a good part of the kinetic energy of a blow or similar stress. The usefulness of such a structural element if used, for example, as a guardrail or median strip on a highway should be considered.

As already said, for the construction of the structural elements, object of the invention, besides concrete, another different material can be used, for example, by inserting packages 3'' of pressed pieces 3' in a shell of metal, of synthetic material (cases not represented in the drawings because easy to imagine).

The embodiments of the described process, and the structural elements considered in the description and drawings, refer only to preferred embodiments, being able to be modified within the scope of what is expressed in claim 1 and in the subsequent subclaims.

## Claims

1. Process for the production of structural elements (7) able to be used for the construction of wall works, wharves, guardrails, port works and the like, wherein a part of the inside volume of the element is occupied with the rubber of casings (3) of tires which are no longer reusable whose volume has been reduced to a given extent by compression, the process being characterized by the following phases:
a) fragmentation of casings (3) performed by a device suitable for cutting casings (3) themselves;
b) conveying pieces (3') thus obtained into work area (5) of a press (4);
c) pressing of said pieces (3') at a pressure (P) sufficient to obtain a desired percentage reduction of the volume occupied by them, and obtaining "packages" (3'') having substantially a parallelepiped shape;
d) blocking of said packages (3'') which is only obtained by ties made with several wires (6') having a resistance to traction sufficient to contain the thrust generated by the elastic flowback of said pressed pieces (3');
e) insertion and anchoring of one or more packages (3'') inside a structural element of the wished shape and made with the wished material.

2. Process according to claim 1, wherein the structural element is made from concrete, the said phase e) consisting in:
- insertion and anchoring of one of more packages in a form (9) by concrete in the desired position, with laying of reinforcement rods;
- filling of form (9) by pouring concrete (7').

## Patentansprüche

1. Verfahren zur Herstellung von Bauteilen (7), die sich für die Errichtung von Mauerwerk, Kaianlagen, Brüstungen, Hafenanlagen usw. eignen, wobei ein Teil des inneren Volumens der Bauteile durch Gummi von Mänteln (3) nicht wieder verwendbarer Reifen eingenommen wird, dessen Volumen durch Kompression in einem gegebenen Ausmaß vermindert wurde, gekennzeichnet durch die folgenden Stufen:
(a) Zerkleinerung der Mäntel (3) , die durch eine Vorrichtung erfolgt, die die Mäntel (3) zu schneiden vermag;
(b) Förderung der so erhaltenen Stücke (3') in die Arbeitszone (5) einer Presse (4);
(c) Pressen der Stücke (3') unter einem Druck (P), der für eine gewünschte prozentuale Verminderung des von ihnen beanspruchten Volumens ausreichend ist, wodurch "Pakete" (3'') entstehen, die im wesentlichen Quaderform aufweisen;
(d) Blockieren der Pakete (3''), was lediglich durch ein Binden mit mehreren Drähten (6') bewirkt wird, die genügend widerstandsfähig gegen Zugbelastung sind, um die Druckkraft aufzufangen, die von der elastischen Rückstellkraft der gepreßten Stücke (3') erzeugt wird;
(e) Einsetzen und Verankern eines oder mehrerer Pakete (3'') innerhalb eines Bauteils mit der gewünschten Form und hergestellt aus dem gewünschten Material.

2. Verfahren nach Anspruch 1, wobei das Bauteil aus Beton hergestellt ist und die Stufe (e) besteht in
- dem Einsetzen und der Verankerung eines oder mehrerer Pakete in eine Form (9) mittels Betons an der gewünschten Stelle, wobei Armierungseisen gelegt werden;
- Füllen der Form (9) durch Gießen von Beton (7').

## Revendications

1. Procédé de fabrication d'éléments de construction (7) pouvant être utilisés pour la construction de murs, de quais, de rails de sécurité, d'ouvrages portuaires et analogues, dans lequel une partie du volume intérieur de l'élément est occupée par le caoutchouc de carcasses (3) de pneumatiques qui ne sont pas réutilisables et dont le volume a été réduit par compression jusqu'à une valeur donnée, ce procédé étant caractérisé par les opérations suivantes :
a) fragmentation des carcasses (3) effectuée par un dispositif approprié à la découpe des carcasses (3) elles-mêmes ;
b) transfert des morceaux (3') ainsi obtenus dans une zone de travail (5) d'une presse (4) ;
c) compression des dits morceaux (3') par une force de pression (P) suffisante pour obtenir une réduction d'un pourcentage désiré du volume occupé par ces dits morceaux et obtention de "blocs" (3'') présentant sensiblement une forme de parallélépipède ;
d) blocage des dits blocs (3'') au moyen seulement de liens faits de plusieurs fils (6') présentant une résistance à la traction suffisante pour contenir la contrainte produite par l'expansion élastique des dits morceaux comprimés (3') ;
e) introduction et ancrage d'un ou de plusieurs blocs (3'') à l'intérieur d'un élément de construction de forme désirée et réalisé dans le matériau désire.

2. Procédé selon la revendication 1, dans lequel l'élément de construction est en béton, ladite opération e) consistant :
à introduire et ancrer un ou plusieurs blocs en position désirée dans un moule à béton (9), avec disposition de tiges de renforcement.
à remplir le moule (9) en versant du béton (7').
